# EUROPÄISCHE PATENTSCHRIFT

(11) **EP 0 955 490 B1**
(45) Veröffentlichungstag und Bekanntmachung des Hinweises auf die Patenterteilung: **05.11.2003**
(21) Anmeldenummer: 98104948.9
(22) Anmeldetag: 18.03.1998
(51) Int. Cl.: F16J 15/38

(54) **Nebendichtungsanordnung an einem Gleitring**
Auxillary sealing device at a slip-ring
Dispositif de joint auxiliaire sur une bague glissante

(43) Veröffentlichungstag der Anmeldung: 10.11.1999
(73) Patentinhaber: Carl Freudenberg KG, 69469 Weinheim (DE)
(72) Erfinder: Borchert, Johannes, Dipl.Ing., 22339 Hamburg (DE); Günther, Hans Werner Dipl.Ing., 31623 Drakenburg (DE); Larsen, Frank Dipl.Ing., 21149 Hamburg (DE)

(56) Entgegenhaltungen:
- DE-A- 19 546 824
- US-A- 2 328 578
- US-A- 3 897 957
- US-A- 4 327 921
- US-A- 4 429 884

## Beschreibung

In Gleitringdichtungen befindet sich die Hauptdichtung zwischen den relativ zueinander gleitenden Stirnflächen eines Gleitrings und eines Gegenrings. Während der Gegenring mit einem der gegeneinander abzudichtenden Bauteile axial fest verbunden ist, ist der Gleitring mit dem anderen Bauteil zwar drehfest, aber axial beweglich verbunden, um unter der Wirkung einer Feder und gegebenenfalls eines Differenzdrucks zur Erzeugung der Dichtpressung gegen den Gegenring angestellt werden zu können. Der Gleitring muß gegenüber dem zugehörigen Bauteil durch eine Nebendichtung abgedichtet werden, die ihm diese Bewegung gestattet.

Es sind in diesem Zusammenhang zwei Bewegungsarten zu unterscheiden. Das eine ist die langsame Nachstellbewegung, durch die Verschleiß an den Gleitflächen und Wärmedehnungen kompensiert werden. Das andere ist eine an die Drehfrequenz gekoppelte, rasche Wechselbewegung geringer Amplitude, die durch Abweichungen der Gleitflächenebene von der genauen Radialrichtung oder andere betriebliche, mit der Umdrehungszahl verknüpfte Betriebsvorgänge verursacht sein kann. Während die erstgenannte Bewegungsart in der Regel zu einem Gleiten des Dichtrings an der zylindrischen Gegenfläche führt, ist es bekannt, daß die zweitgenannte Bewegungsart bei Verwendung eines elastomeren Dichtrings (beispielsweise eines O-Rings) in vielen Fällen ohne Gleiten der Kontaktflächen durch Scherverformung aufgenommen wird (Müller: Abdichtung bewegter Maschinenteile, Waiblingen, 1990, S. 100).

Bei dieser Scherbewegung bleiben die Grenzen der am O-Ring und an den ihn einfassenden Umfangsflächen zusammenwirkenden Kontaktflächenpaare nicht konstant. Es findet ein geringfügiges Rollen statt. Bewegt sich eine Umfangsfläche im Verhältnis zum Zentrum des O-Ring-Querschnitts in einer Axialrichtung, so weichen beide Grenzen im Verhältnis zu dieser Bewegungsrichtung und bezogen auf diese Umfangsfläche ein wenig zurück. Das heißt, auf der vorne liegenden Seite verliert ein Teil der O-Ring-Oberfläche den Kontakt mit der Umfangsfläche, während sich umgekehrt an der hinten liegenden Grenze ein zuvor spitzwinklig von der Umfangsfläche abgehobener Oberflächenteil des O-Rings an die Umfangsfläche anlegt. Dies ist dann schädlich, wenn ein Medium ansteht, das zu Ablagerungen neigt, bei denen es sich um Partikeln von Suspensionen oder ausgefällte Lösungen handeln kann. Sie setzen sich bevorzugt in dem spitzwinklig endenden Zwickelraum zwischen den Oberflächen des O-Rings und den Umfangsflächen an den Kontaktflächengrenzen an und können nicht nur zur Schädigung der beteiligten Oberflächen, sondern auch zu Undichtigkeit führen, weil eine Pumpwirkung zwischen den Ablagerungen und der damit in schnellem Wechsel zusammenwirkenden O-Ring-Oberfläche erzeugt werden kann, durch die Medium in die Dichtung hineingedrückt wird.

Dem wirkt die Erfindung durch die im Anspruch 1 und vorzugsweise auch durch die in den Unteransprüchen genannten Merkmale entgegen.

Durch die Erfindung wird das oben beschriebene oszillierende Wandern der Kontaktflächengrenze durch konstruktive Maßnahmen ausgeschlossen, nämlich dadurch, daß die Grenze durch eine konvexe Kante an wenigstens einer der beteiligten Flächen gebildet ist. Falls sich bei dieser Grenze Ablagerungen bilden, so werden sie wegen der Unbeweglichkeit der Grenze doch nicht zwischen der Umfangsfläche und der Oberfläche des Elastomerrings eingequetscht und können daher weder zur Beschädigung der beteiligten Oberflächen noch zu einer Pumpwirkung führen. Die rasch oszillierende Relativbewegung zwischen dem Gleitring und dem zugehörigen Bauteil wird ausschließlich der Schubverformung des Elastomerrings überlassen.

Hierbei sind die zusammenwirkenden Kontaktflächen des Elastomerrings und einer betrachteten Umfangsfläche gegeneinander unaxial unverschiebbar festgehalten. Diese Unverschiebbarkeit der Kontaktflächen gegeneinander bezieht sich auf die rasche Oszillationsbewegung. Sie muß sich nicht auf die Langzeitbewegungen beziehen. Jedoch ist eine auch langzeitige Festlegung der Kontaktflächen gegeneinander im Rahmen der Erfindung durchaus möglich und gegebenenfalls auch vorteilhaft.

Der Schutz der Erfindung soll nicht von der Art und Weise beeinflußt werden, wie der Gleitring mit dem zugehörigen Bauteil konstruktiv verbunden ist. Insbesondere kommt es nicht darauf an, ob der Teil, der die an der Bildung der Kontaktfläche beteiligte Umfangsfläche bildet, einstückig mit dem Teil verbunden ist, der die Haltefunktion auf den Gleitring ausübt. Auch kommt es nicht darauf an, ob der Gleitring mit dem stehenden oder dem rotierenden Bauteil verbunden ist, obgleich die Anwendung bei stehendem Gleitring aus weiter unten zu erläuternden Gründen vorteilhaft ist.

Es genügt in der Regel, die erfindungsgemäße Festlegung der Kontaktflächengrenze auf der Seite desjenigen von der Dichtung begrenzten Raums vorzusehen, der das ablagerungsgefährdende Medium enthält. Jedoch kann auch auf der anderen Seite eine entsprechende Formgebung vorgesehen sein, beispielsweise um eine variable Anwendung eines Serien-Gleitringdichtungstyps zu ermöglichen. Es ist auch nicht erforderlich, daß die erfindungsgemäße Festlegung der Kontaktflächengrenze an beiden Umfangsflächen vorgenommen wird, weil unterschiedliche konstruktive Voraussetzungen (beispielsweise Materialwahl) oder das Ausmaß des oszillierenden Rollens aufgrund unterschiedlicher Formgebung auf beiden Seiten verschieden sein kann. Jedoch ist es im allgemeinen zweckmäßig, die erfindungsgemäße Maßnahme an beiden Umfangsflächen vorzusehen.

Jede Kontaktflächengrenze kann durch eine Kante auf der Seite nur einer der beiden beteiligten Oberflächen bestimmt werden. Jedoch ist es auch möglich, beide Oberflächen an übereinstimmender Stelle mit einer Kante zu versehen.

Das Merkmal, daß die Kante konkav sein soll, ist in bezug auf den anderen, an der Kante anliegenden Körper zu verstehen.

Unter einer Kante ist im Zusammenhang mit der Erfindung eine im Meridionalschnitt scharfe Richtungsänderung zu verstehen, die im allgemeinen über den Umfang des betreffenden Bauteils konstant ist und also als Rotationsfläche ausgebildet ist. Der je nach Einsatzfall gebotene Schärfegrad der Kante kann leicht durch Versuch ermittelt werden. Einerseits soll die Kante nicht so scharf sein, daß sie in die Oberfläche des Elastomerrings einschneidet. Andererseits muß vermieden werden, daß eine zu starke Kantenabrundung zu ausgedehnten, spitzwinkligen Zwickelräumen führt, an denen durch oszillierendes Wandern der Kontaktflächengrenze eine Verschleiß- oder Pumpwirkung erzeugt werden kann. In diesem Zusammenhang kann auch der Winkel der an der Umfangsfläche gebildeten Richtungsänderung eine Rolle spielen. Sie soll stumpfwinklig sein und vorzugsweise über 100° liegen.

Wenn axial dem Elastomerring benachbart ein Bund vorgesehen ist, dessen Stirnfläche den Elastomerring gegenüber einer Druckdifferenz abstützt, so kann diese mit der erfindungsgemäßen Kante versehen werden. Zwar ist es bekannt, eine solche Stirnfläche scharfkantig auszubilden; dabei ragt sie aber im allgemeinen über die Mitte eines O-Rings hinaus, so daß dieser nicht oder nur ausnahmsweise mit der Kante in Berührung kommt und vielmehr mit der Stirnfläche einen spitzwinkligen Zwickelraum mit der Möglichkeit einer oszillierenden Bewegung der Kontaktflächengrenze einschließt.

Um die Kante eines solchen Bundes im Sinne der Erfindung zur Einwirkung auf die Oberfläche des Elastomerrings zu bringen, muß die radiale Höhe des Bundes in der Regel geringer sein, als dies allein im Hinblick auf die Abstützung des Elastomerrings durch diesen Bund zweckmäßig erscheinen würde. Wenn die Höhe des Bundes für die Abstützung nicht ausreicht, kann ein entsprechender Bund an der gegenüberliegenden Umfangsfläche vorgesehen werden, der einen weiteren Anteil der Abstützung übernimmt.

Die die Grenze des Kontaktflächenpaars bestimmende Kante kann auch am Elastomerring vorgesehen sein, beispielsweise dadurch, daß dieser im Querschnitt polygonal, insbesondere rechteckig, ausgeführt ist.

Die Festlegung der Kontaktflächengrenze durch die Kante ist nur dann gewährleistet, wenn in allen praktisch bedeutsamen Verschiebezuständen des Gleitrings gegenüber dem zugehörigen Bauteil die Anlage des Elastomerrings bis hin zur Kante gewährleistet ist. Dies kann durch die radiale Vorspannung des Elastomerrings zwischen den Umfangsflächen und geeignete Bemessung der Querschnittsprofile, die durch Versuch oder Berechnung leicht zu ermitteln ist, sichergestellt werden. Ferner kann dies nach der Erfindung dadurch begünstigt werden, daß für den Elastomerring ein Material verwendet wird, das einen unter den Anwendungsbedingungen (Temperatur, Druck) beträchtlichen Druckverformungsrest aufweist. Unter dem Druckverformungsrest versteht man die Eigenschaft von Elastomerringen, unter lang dauernder Belastung eine gewisse plastische Verformung zu erleiden. Diese Eigenschaft ist bei Elastomerringen für den vorliegend diskutierten Anwendungszweck normalerweise unerwünscht. Im erfindungsgemäßen Zusammenhang kann sie jedoch günstig sein, weil sie bei langfristigen Verschiebungen der den Elastomerring einspannenden Umfangsflächen dazu beiträgt, daß er sich den jeweiligen Verhältnissen anpassen kann. Einen hohen Druckverformungsrest in der Größenordnung von 35 bis 70% haben beispielsweise Perfluorelastomere. Vorteilhaft ist aber auch schon ein Druckverformungsrest oberhalb von 25%. Vergleichbare Zahlenwerte erhält man nach dem Meßverfahren ASTM D 395. Hier wird der Druckverformungsrest direkt an O-Ringen bei einer Temperatur von 204°C gemessen. Die Meßdauer beträgt 70 Stunden.

Prinzipiell ist es für die Erfindung ohne Belang, ob der Gleitring drehend oder am stationären Bauteil angeordnet ist. Vorzugsweise wird er jedoch auf der stationären Seite verwendet, damit das ablagerungsgefährdende Medium nicht den Federraum und den Bewegungsspalt zwischen dem Gleitring und angrenzenden Bauteilen erreicht.

Die Erfindung wird im folgenden näher unter Bezugnahme auf die Zeichnung erläutert, die vorteilhafte Ausführungsbeispiele schematisch veranschaulicht. Es zeigen:
- Fig. 1 bis 3: Teilschnitte durch den Bereich der Kontaktflächengrenze verschiedener Profilausführungen,
- Fig. 4 bis 7: ein Ausführungsbeispiel einer Nebenabdichtung in unterschiedlichen Betriebszuständen,
- Fig. 8: einen Längsschnitt durch eine Gleitringdichtung, die die Anordnung gemäß Fig. 4 bis 7 verwendet und
- Fig. 9 u. 10: weitere Querschnittsformen von erfindungsgemäß verwendbaren Elastomerringen.

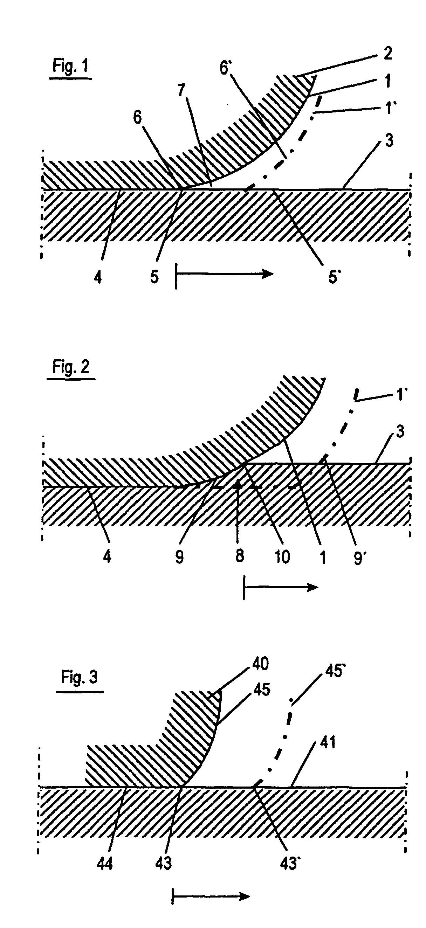

Fig. 1 dient zur Demonstration des Standes der Technik. Die Oberfläche 1 eines O-Rings 2 ist durch radiale Vorspannung gegen die zylindrische Umfangsfläche 3 eines Gleitrings gedrückt. Der Kontaktflächenbereich 4 endet in dem mit durchgezogenen Linien gezeigten Betriebszustand in einem Grenzpunkt, der auf der Seite der Umfangsfläche 3 von einem Oberflächenpunkt 5 und auf der Seite der O-Ring-Oberfläche 1 von einem Punkt 6 gebildet ist. Wird die Umfangsfläche 3 nun um die mit Pfeil bezeichnete Strecke verschoben, wandert der Punkt 5 an die Stelle 5'. Die an der Umfangsfläche 3 haftende Oberfläche des O-Rings wird dabei teilweise mitgenommen, wie dies strichpunktiert bei 1' angedeutet ist. Der O-Ring-seitige Grenzpunkt 6 hebt sich dabei von der Umfangsfläche 3 ab. Man erkennt daraus, daß der Zwickelraum 7 zwischen der O-Ring-Oberfläche 1 und der Umfangsfläche 3 sich bei jeder Oszillation öffnet und schließt, was im Falle von Ablagerungen in diesem Bereich zu Verschleiß und Pumpwirkung führen kann.

Demgegenüber zeigt Fig. 2 eine Ausführung, in welcher die Umfangsfläche 3 mit einem radialen Ringvorsprung 8 versehen ist, der eine Kehle 9 bildet, die in einer stumpfwinkligen Kante 10 endet. Die Kehle 9 ist so geformt, daß die O-Ring-Oberfläche 1 sich unter der radialen Vorspannung des O-Rings und gegebenenfalls unter einer betrieblich herrschenden Druckdifferenz an der Kehlfläche anlegt und sich bei der Kante 10 von der Umfangsfläche 3 abhebt. Ferner ist die Bemessung so getroffen, daß dies auch noch nach der durch Pfeil angegebenen Axialverschiebung der Umfangsfläche 3 gilt. Dabei ändert sich lediglich der Winkel, unter welchem sich die O-Ring-Oberfläche von der Umfangsfläche abhebt; jedoch findet ein Wandern des Grenzpunkts, in welchem der Kontaktflächenbereich 4 endet, nicht statt. Jedenfalls gilt dies, wenn die Kante 10 ganz scharf ausgebildet ist. Dies ist zwar möglich, in vielen Fällen aber zur Schonung des O-Rings nicht ratsam. Man wird sie ein wenig brechen oder abrunden, wobei aber eine Verschiebung der Kontaktflächengrenze auf den Bereich dieser Abrundung begrenzt bleibt und daher vernachlässigbar ist.

Entsprechendes gilt für den in Fig. 3 veranschaulichten Fall. Dort ist vorausgesetzt, daß ein im Querschnitt rechteckiger Dichtring 40 mit einer Umfangsfläche 41 zusammenwirkt, wobei die die Kontaktfläche 44 bildenden Oberflächenanteile des Elastomerrings 40 und der Oberfläche 41 unverschiebbar aneinandergehalten sind. Die Kontaktfläche wird begrenzt durch die Kante 43 des Elastomerrings 40. Im Falle einer Verschiebung der Umfangsfläche 41 um die durch Pfeil angedeutete Strecke wandert der Punkt 43 an die Stelle 43'. Dabei ändert sich wiederum nur der Winkel, unter welchem die unter der radialen Vorspannung ausgewölbte Seitenfläche 45 des Elastomerrings auf die Umfangsfläche 41 trifft. Ein Wandern des Grenzpunkts 43, der durch die Kante des Elastomerrings gebildet wird, findet auf der Umfangsfläche 41 nicht statt.

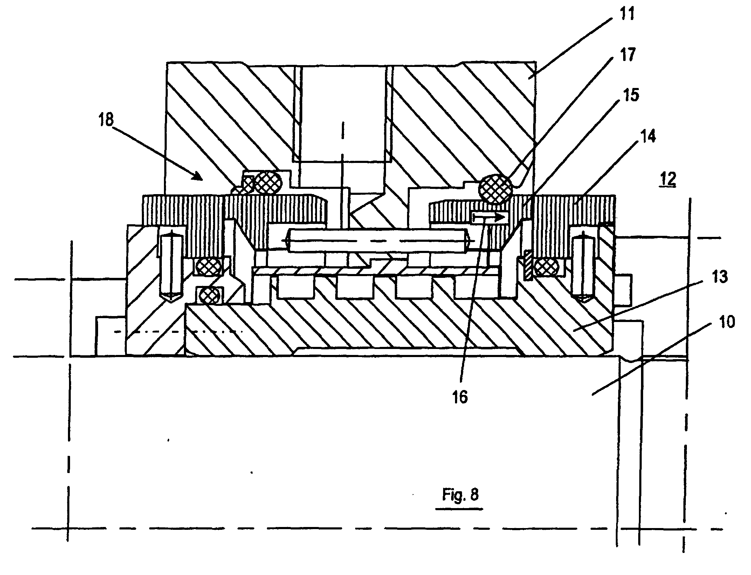

Ein praktisches Beispiel wird im folgenden unter Bezugnahme auf die Fig. 4 bis 7 besprochen, die einen Ausschnitt aus der in Fig. 8 gezeigten Gleitringdichtung veranschaulichen. Diese Ausführung betrifft einen Anwendungsfall, in welchem eine Welle 10 durch einen Gehäuseteil 11 aus einem Raum 12 herausgeführt wird, der eine abrasive Suspension enthält. Auf der Welle 10 bzw. einer damit drehfest verbundenen Hülse 13 ist in Umfangs- und Axialrichtung fest ein Gegenring 14 montiert, der mit einem Gleitring 15 zusammenarbeitet, der in nicht näher gezeigter Weise drehfest, aber axial beweglich von dem Bauteil 11 gehalten ist, durch eine Feder in Pfeilrichtung 16 beaufschlagt ist und gegenüber dem Bauteil 11 durch die Nebendichtung 17 abgedichtet ist, die in den Fig. 4 bis 7 in größerem Maßstab erscheint. Auf der vom Raum 12 abgewandten Seite wird der Gleitring 15 von einem nicht ablagerungsgefährdenden Sperrmedium beaufschlagt, dessen Druck höher als im Raum 12 ist. Der Sperrmediumsraum wird zur Atmosphäre hin durch eine weitere Gleitringdichtung 18 geschlossen.

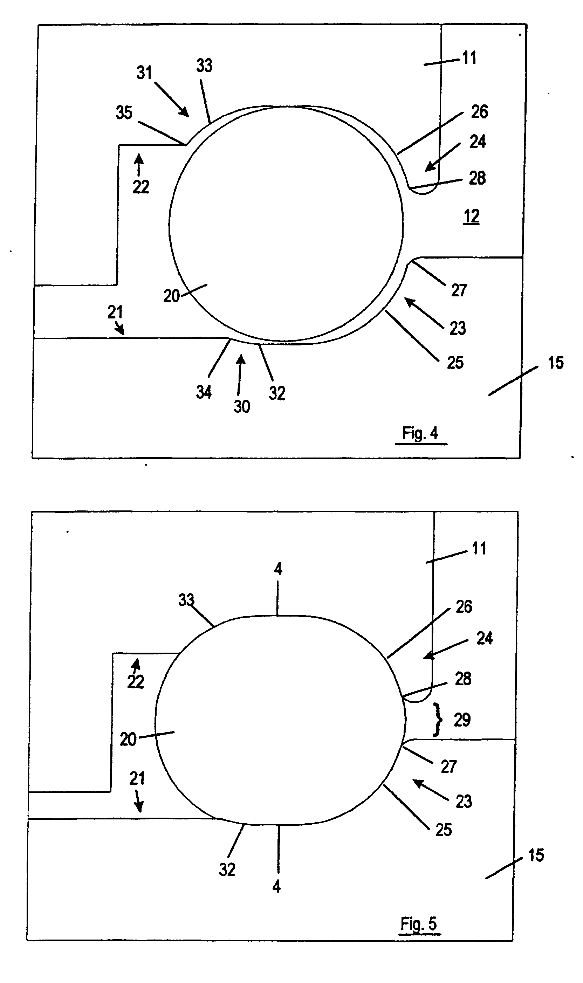

Fig. 4 zeigt die Nebendichtung mit O-Ring 20, gleitringseitiger Umfangsfläche 21 und bauteilseitiger Umfangsfläche 22. Die Umfangsflächen sind (abweichend von der Wirklichkeit) radial auseinandergerückt, so daß der O-Ring entspannt ist. Man erkennt, daß beide Umfangsflächen niederdruckseitig Ringvorsprünge oder Schultern 23,24 aufweisen, deren Kehlflächen 25,26 der Umfangsgestalt des O-Rings 20 etwa entsprechend gestaltet sind und in abgerundeten Kanten 27,28 enden, die zwischen sich einen Radialabstand 29 (Fig. 5) freilassen.

Auf der Druckseite sind beide Umfangsflächen gleichfalls mit Ringvorsprüngen 30,31 versehen, die Kehlflächen 32,33 bilden, die in scharfen Kanten 34,35 enden, an denen die Umfangsflächen in zylindrische Richtung übergehen. Der Richtungsänderungswinkel liegt über 100°, vorzugsweise in der Größenordnung bis 150°. Die Kehlflächen 25,26,32,33 sind insgesamt der Form etwa angepaßt, die der O-Ring nach seiner Montage in radial zusammengedrücktem Zustand hat. Wir werden jedoch sehen, daß eine Formgebung zweckmäßig sein kann, die die Vorspannung im Bereich der Kanten 27,28 und gegebenenfalls 34,35 erhöht, um dort in allen Betriebszuständen eine spaltfreie Anlage zu gewährleisten.

Nach der Montage der Dichtung und unter dem von links nach rechts (in der Zeichnung) wirkenden Differenzdruck ergibt sich der in Fig. 5 dargestellte Zustand, in welchem der O-Ring 20 radial ein wenig zusammengedrückt ist. An den Umfangsflächen 21,22 und insbesondere an den Kehlflächen 25,26,32,33 liegt er unter Vorspannung an. Die Kehlflächen 25,26 verleihen ihm die notwendige axiale Abstützung gegenüber dem Differenzdruck. Es ist hier vorausgesetzt, daß die Kanten 27,28 einander genau radial gegenüberstehen.

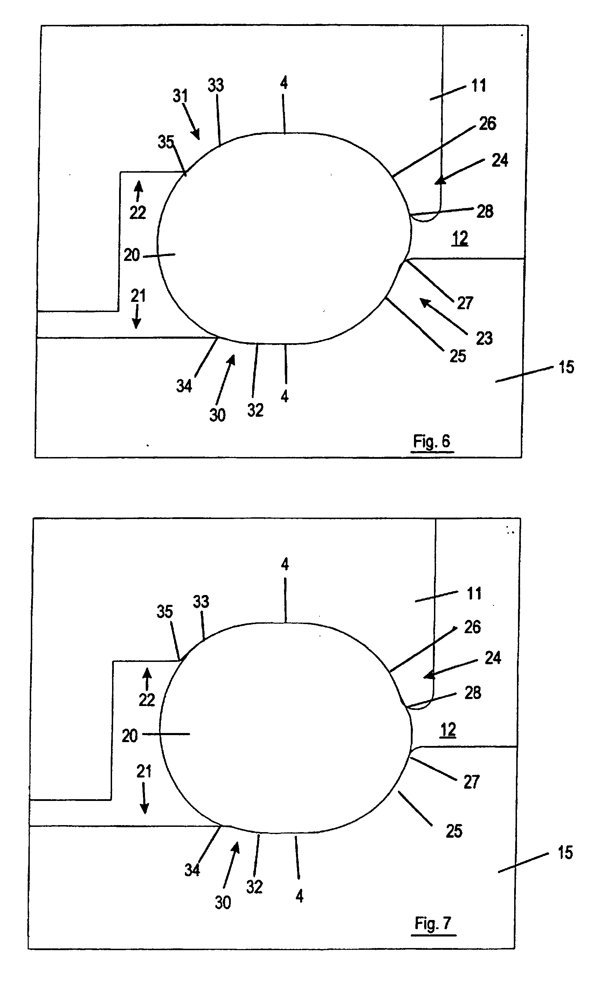

Wird nun gemäß Fig. 6 die Umfangsfläche 21 gegenüber der Umfangsfläche 22 ein wenig nach links verschoben, so wird zwar die Pressung an der Kante 27 vergrößert und an der Kante 28 entlastet; jedoch findet praktisch keine Verlagerung der Kontaktflächengrenze statt. Wenn man unterstellt, daß die Darstellungen maßstäblich sich auf ein Beispiel mit folgenden Grundmaßen beziehen:
Schnurdurchmesser des O-Rings 7 mm,
Innendurchmesser des O-Rings 124 mm,
radiale Verpressung des O-Rings 10%,
axiale Verschiebung 0,25 mm,
so veranschaulichen die dargestellten Unterschiede diejenigen Veränderungen, die sich während der Lebensdauer einer Gleitringdichtung mit Hartstoffringen und entsprechend geringem Verschleiß einstellen mögen. Die Amplitude bei rascher Oszillation ist noch wesentlich geringer. Die dabei eintretende Verschiebung des Kontaktflächengrenzpunkts ist vernachlässigbar. Außerdem hat man es durch geeignete Bemessung der Radien der Kanten 27,28 in der Hand, diese Verschiebung noch beliebig zu verringern.

Fig. 7 zeigt die Verhältnisse bei einer gegensinnigen Verschiebung. Durch Versuch oder - wie im vorliegenden Beispiel - durch Finite-Elemente-Berechnung können die Grenzen herausgefunden werden, innerhalb welcher ein Abheben der Dichtringoberfläche zumindest an der Seite, von der her Ablagerungen zu befürchten sind, nicht stattfindet.

Die Beispiele der Fig. 4 bis 7 zeigen, daß diese Anordnung auch (abweichend von Fig. 8) für solche Anwendungsfälle verwendbar ist, in denen die Ablagerungsgefährdung auf der Seite des höheren Drucks (links in den Figuren 4-7) besteht. Man erkennt nämlich, daß zwischen den in Fig. 5 und 6 veranschaulichten Betriebszuständen eine Verschiebung der Kontaktflächengrenzen im Bereich der Kanten 34,35 nicht stattfindet und daß man auch nahe an die in Fig. 7 veranschaulichten Betriebsverhältnisse herangehen kann. Dabei erkennt man leicht, daß ein O-Ring aus einem Material mit einem gewissen Druckverformungsrest dazu neigen wird, unter der herrschenden Druckdifferenz sich an der Kehlfläche 25 anzulegen. Da die Axialverschiebung, die zu dem in Fig. 7 gezeigten Betriebszustand führt, sehr langsam vonstatten geht (im Gegensatz zu den raschen Oszillationen), ist durchaus damit zu rechnen, daß bei Verwendung eines solchen Werkstoffs die Anwendungsgrenzen der Erfindung vergrößert werden können.

Die Ringvorsprünge 30,31 unterscheiden sich von den Ringvorsprüngen 23,24 durch ihre geringe radiale Höhe, weil sie keine Abstützung gegenüber einem Differenzdruck zu bewirken brauchen. Sie können daher freier optimiert werden. Dabei kann insbesondere dem Ringvorsprung 30 eine so geringe Höhe zugeordnet werden, daß der Gleitring 15 bei der Montage noch hinreichend leicht von rechts her axial in den festen Bauteil 11 eingeschoben werden kann, in welchen der O-Ring zuvor eingesetzt wurde.

Man wird bestrebt sein, den Abstand 29 zwischen den Kanten 27,28 nicht sehr klein werden zu lassen, weil die Beanspruchung des Elastomerrings sowie seine Verformung in den Grenzbereichen der Kontaktflächen um so geringer sind, je größer dieser Abstand ist.

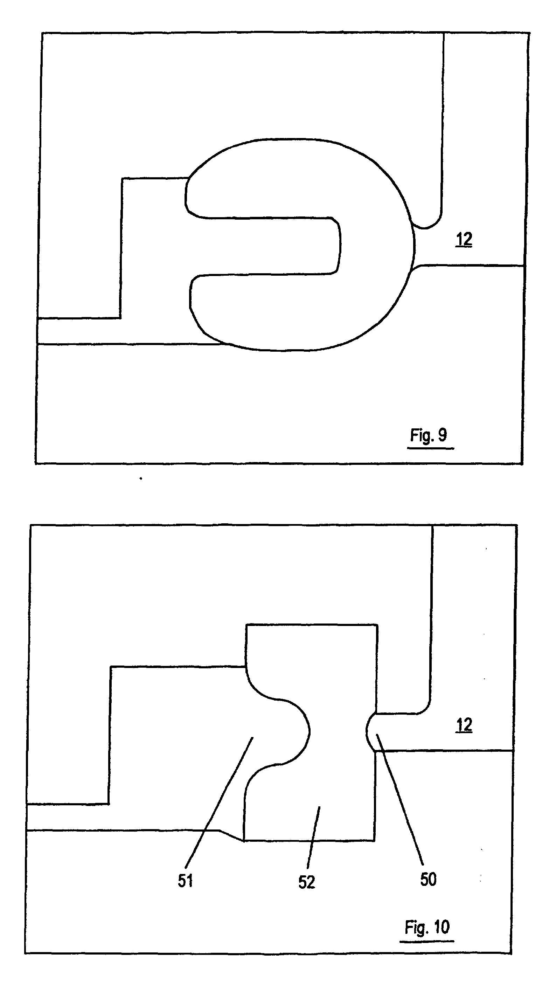

Die durch diese Schubbewegungen im Elastomerring induzierten Kräfte und die damit im Zusammenhang stehenden Verformungen an den Kontaktflächengrenzen sind ferner um so geringer, je geringer der der Verformung unterliegende Querschnitt des Elastomerrings ist. Die Fig. 9 und 10 veranschaulichen Beispiele dafür, wie dieser Querschnitt verringert werden kann.

Fig. 9 veranschaulicht einen Elastomerring von nutringähnlichem Querschnitt, dessen Schenkel durch einen von links her wirkenden Überdruck gegen die abzudichtenden Umfangsflächen gepreßt sind. Die Schubverformung des Elastomerrings findet nicht über den verhältnismäßig großen Querschnitt eines O-Rings statt, sondern lediglich im Bereich des die Schenkel verbindenden Stegs, der einer solchen Verformung wegen seiner geringeren Dicke weniger Widerstand entgegensetzt. Diese Anordnung ist insbesondere auch für Anwendungsfälle geeignet, in denen ablagerungsgefährdendes Medium auf der Überdruckseite (von links) wirkt, weil die Position der Schenkel von der Schubbewegung praktisch nicht beeinflußt wird und daher die in der Zeichnung links erscheinenden Grenzen der Kontaktfläche sich kaum verändern.

In Fig. 10 ist das Ausführungsbeispiel eines Elastomerringquerschnitts gezeigt, bei welchem die dem Raum 12 zugewendeten Grenzen der Kontaktflächen nicht nur durch Kanten auf seiten der Umfangsflächen, sondern auch durch an gleicher Stelle angeordnete Kanten auf der Seite des Elastomerrings bestimmt werden, der zu diesem Zweck dem Raum 12 eine geringe Einkehlung 50 zuwendet. Die etwas größere Einkehlung 51 auf der Überdruckseite sorgt dafür, daß die durch diese Einkehlung 51 gebildeten Schenkel dicht an den in diesem Fall zylindrischen Teilen der Umfangsflächen anliegen. Zwischen den Einkehlungen 50,51 liegt ein verhältnismäßig dünner Querschnittsbereich 52, dessen differenzdruck- und verschiebungsbedingte Verformung sich auf den Verformungszustand des Elastomerrings in den Grenzbereichen der Kontaktflächen nur wenig auswirkt.

## Patentansprüche

1. Nebendichtungsanordnung zwischen einem Gleitring (15) einer Gleitringdichtung und einem den Gleitring (15) undrehbar, aber axial beweglich haltenden Bauteil (11) mit einem Elastomerring (2, 20, 40), der zwischen Umfangsflächen (3, 21, 22, 41) des Gleitrings (15) und des Bauteils (11) radial vorgespannt ist unter Bildung von Paaren zusammenwirkender Kontaktflächen (4) an der Oberfläche (1) des Elastomerrings (2, 20) und den Umfangsflächen (2, 21, 22), **gekennzeichnet durch** eine konvexe, im Meridionalschnitt eine scharfe Richtungsänderung aufweisende Kante (10, 27, 28, 34, 35, 43) an wenigstens einer Oberfläche wenigstens eines gebildeten Kontaktflächenpaares (4), welche eine Kontaktflächengrenze (5, 6) bildet, welche bei schnellen Oszillationsbewegungen des Gleitrings (15) axial unverschiebbar festgelegt ist.

2. Dichtungsanordnung nach Anspruch 1, **dadurch gekennzeichnet, daß** die Kante (10,27,28,34,35) an der Umfangsfläche (3,21,22) vorgesehen ist.

3. Dichtungsanordnung nach Anspruch 2, **dadurch gekennzeichnet, daß** die Kante (10,27,28,34,35) von einem radialen Ringvorsprung (8,23,24,30,31) gebildet ist.

4. Dichtungsanordnung nach Anspruch 3, **dadurch gekennzeichnet, daß** an wenigstens einer Umfangsfläche zwei einander zugewandte Ringvorsprünge (30,23 bzw. 24,31) an beiden Grenzen eines Kontaktflächenpaars (4) vorgesehen sind.

5. Dichtungsanordnung nach einem der Ansprüche 1 bis 4, **dadurch gekennzeichnet, daß** die Kante (43) am Elastomerring (40) vorgesehen ist.

6. Dichtungsanordnung nach einem der Ansprüche 1 bis 5, **dadurch gekennzeichnet, daß** an beiden Umfangsflächen (21,22) die Grenzen der Kontaktflächenpaare zu wenigstens einem der beiden von der Dichtungsanordnung getrennten Räume hin durch eine Kante (27,28 bzw. 34,35) vorbestimmt sind.

7. Dichtungsanordnung nach Anspruch 2, **dadurch gekennzeichnet, daß** wenigstens einer der radialen Ringvorsprünge (23,24) als ein den Elastomerring (20) axial gegenüber einer Druckdifferenz abstützender Bund ausgeführt ist.

8. Dichtungsanordnung nach einem der Ansprüche 1 bis 7, **dadurch gekennzeichnet, daß** das Material des Elastomerrings (20) unter den Anwendungsbedingungen einen beträchtlichen Druckverformungsrest aufweist.

9. Dichtungsanordnung nach einem der Ansprüche 1 bis 7, **dadurch gekennzeichnet, daß** die Vorbestimmung der Kontaktflächengrenze durch eine Kante (10,27,28,34,35) wenigstens auf derjenigen Seite der Dichtungsanordnung vorgesehen ist, an der ein ablagerungsgefährdendes Medium ansteht.

10. Dichtungsanordnung nach einem der Ansprüche 1 bis 9, **dadurch gekennzeichnet, daß** der Gleitring nicht rotierend angeordnet ist.

## Claims

1. A secondary sealing arrangement between a sliding ring (15) of a mechanical seal and a component (11) which holds the sliding ring (15) in a non-rotatable but axially movable manner, having an elastomeric ring (2, 20, 40) which is radially prestressed between circumferential surfaces (3, 21, 22, 41) of the sliding ring (15) and the component (11) while forming pairs of interacting contact areas (4) at the surface (1) of the elastomeric ring (2, 20) and at the circumferential surfaces (2, 21, 22), **characterized by** a convex edge (10, 27, 28, 34, 35, 43), having an abrupt change in direction in meridional section, on at least one surface of at least one contact-area pair (4), this edge (10, 27, 28, 34, 35, 43) forming a contact-area limit (5, 6) which is secured in an axially fixed manner during rapid oscillatory movements of the sliding ring (15).

2. A sealing arrangement according to claim 1, **characterized in that** the edge (10, 27, 28, 34, 35) is provided on the circumferential surface (3, 21, 22).

3. A sealing arrangement according to claim 2, **characterized in that** the edge (10, 27, 28, 34, 35) is formed by a radial annular projection (8, 23, 24, 30, 31).

4. A sealing arrangement according to claim 3, **characterized in that** two annular projections (30, 23 and 24, 31, resp.) facing one another are provided on at least one circumferential surface at both limits of a contact-area pair (4).

5. A sealing arrangement according to any one of claims 1 to 4, **characterized in that** the edge (43) is provided on the elastomeric ring (40).

6. A sealing arrangement according to any one of claims 1 to 5, **characterized in that** the limits of the contact-area pair are predetermined by an edge (27, 28 or 34, 35) towards at least one of the two spaces separated by the sealing arrangement on both circumferential surfaces (21, 22).

7. A sealing arrangement according to claim 2, **characterized in that** at least one of the radial annular projections (23, 24) is designed as a collar supporting the elastomeric ring (20) axially against a pressure difference.

8. A sealing arrangement according to any one of claims 1 to 7, **characterized in that** the material of the elastomeric ring (20) has considerable compression set under conditions of use.

9. A sealing arrangement according to any one of claims 1 to 7, **characterized in that** the predetermination of the contact-area limit by an edge (10, 27, 28, 34, 35) is provided at least on that side of the sealing arrangement at which a medium giving rise to a risk of deposits is present.

10. A sealing arrangement according to any one of claims 1 to 9, **characterized in that** the sliding ring is arranged in a non-rotating manner.

## Revendications

1. Dispositif de joint auxiliaire situé entre une bague glissante (15) d'un joint d'étanchéité à bague glissante et une pièce (11) maintenant la bague glissante (15) de telle sorte que ladite bague ne puisse pas pivoter mais puisse être déplacée dans le sens axial, pourvu d'une bague élastomère (2, 20, 40) précontrainte dans le sens radial, entre des surfaces circonférentielles (3, 21, 22, 41) de la bague glissante (15) et de la pièce (11), tout en formant des paires de surfaces de contact (4) agissant l'une avec l'autre sur la surface (1) de la bague élastomère (2,20) et sur les surfaces circonférentielles (2, 21, 22), caractérisé, sur au moins une surface d'au moins une paire de surfaces de contact (4) , constituée par une arête convexe présentant, dans une section méridionale, un changement abrupt de direction (10, 27, 28, 34, 35, 43) et constituant une limite de surface de contact (5,6) qui, en cas d'oscillations rapides de la bague glissante (15), ne peut coulisser dans le sens axial.

2. Dispositif de joint selon la revendication 1, **caractérisé en ce que** l'arête (10, 27, 28, 34, 35) est prévue sur la surface circonférentielle (3, 21, 22).

3. Dispositif de joint selon la revendication 2, **caractérisé en ce que** l'arête (10, 27, 28, 34, 35) est formée par une saillie radiale circulaire (8, 23, 24, 30, 31).

4. Dispositif de joint d'étanchéité selon la revendication 3, **caractérisé en ce que** deux saillies circulaires orientées l'une vers l'autre (30, 23 resp. 24, 31) ont été prévues sur au moins une surface circonférentielle, aux deux limites d'une paire de surfaces de contact (4).

5. Dispositif de joint selon une des revendications 1 à 4, **caractérisé en ce que** l'arête (43) est prévue sur la bague élastomère (40).

6. Dispositif de joint selon une des revendications 1 à 5, **caractérisé en ce que**, sur les deux surfaces circonférentielles (21, 22), les limites des paires de surfaces de contact sont prédéfinies par une arête (27, 28 ou 34, 35) en direction d'au moins un des deux espaces délimités par le dispositif de joint.

7. Dispositif de joint selon la revendication 2, **caractérisé en ce que** au moins une des saillies radiales circulaires (23, 24) est conçue sous la forme d'un collet soutenant la bague élastomère (20) dans le sens axial par rapport à une différence de pression.

8. Dispositif de joint selon une des revendications 1 à 7, **caractérisé en ce que** le matériau de la bague élastomère (20) présente, dans les conditions d'utilisation, un résidu de moulage par compression conséquent.

9. Dispositif de joint selon une des revendications 1 à 7, **caractérisé en ce que** la limite des surfaces de contact est prédéfinie par l'intermédiaire d'une arête (10, 27, 28, 34, 35) au moins sur la face du dispositif de joint sur laquelle repose un milieu susceptible de provoquer des dépôts.

10. Dispositif de joint selon une des revendications 1 à 9, **caractérisé en ce que** la bague glissante ne peut tourner.
